# EUROPEAN PATENT APPLICATION

(11) **EP 4 603 942 A1**
(43) Date of publication of application: **20.08.2025**
(21) Application number: 23877361.8
(22) Date of filing: 13.10.2023
(51) Int. Cl.: G05D 1/43, G01C 21/34, G08B 21/10, G08B 27/00, G08G 1/13

(54) **MANAGEMENT DEVICE, MANAGEMENT METHOD, AND MANAGEMENT PROGRAM**

(30) Priority: 14.10.2022 JP 2022165913
(71) Applicant: NTT Communications Corporation, Tokyo 100-8019 (JP)
(72) Inventor: OKAHARA, Masayuki, Tokyo 100-8019 (JP); TAKI, Megumi, Tokyo 100-8019 (JP); TASHIRO, Takeharu, Tokyo 100-8019 (JP)
(74) Representative: Hoffmann Eitle
(86) International application number: PCT/JP2023/037178
(87) International publication number: WO 2024/080360

(57) **Abstract**

A management server (30) includes an acquisition unit configured to receive, from a control server that controls a robot that travels autonomously outdoors and indoors, a current position of the robot or a travel route for the robot; a disaster occurrence sensing unit (334) configured to, based on external information containing disaster information, sense occurrence of a disaster and a disaster occurrence area in which the disaster occurs; a subject robot specifying unit (335) configured to, based on the current position of the robot or the travel route for the robot, specify the robot that is positioned in the disaster occurrence area or that is predicted to be positioned in the disaster occurrence area; an evacuation route determination unit (336) configured to, based on the external information and map information, determine an evacuation route to an evacuation site that is set previously with respect to each the robot positioned in the disaster occurrence area or each the robot predicated to be positioned in the disaster occurrence area; and an evacuation route recommending unit (337) configured to recommend the evacuation route to a terminal device.

## Description

### [Technical Field]

The present invention relates to a management device, a management method, and a management program

### [Background Art]

In recent years, autonomous robots have been developed in order to deal with a labor shortage. Autonomous robots travel indoors and outdoors and thus perform tasks, such as goods delivery, guarding, guiding, cleaning, and transferring people.

There have been examinations on extension of an area in which the autonomous robots travel, not limited to the inside of a facility and an area around the facility, a plurality of facilities and areas around the facilities, and a plurality of areas and shuttles between the areas by remote operations and simultaneous control on a plurality of robots.

A task and a travel route are set in each robot, for example, by each robot operator and traveling by each robot is controlled by a control server of a robot business operator and accordingly each robot travels autonomously.

### [Citation List]

### [Non Patent Citation]

Patent Literature 1: Japanese Laid-open Patent Publication No. 2019-078618
Patent Literature 2: Japanese Laid-open Patent Publication No. 2019-079247

### [Summary of Invention]

### [Technical Problem]

When a disaster occurs or in the case where occurrence of a disaster is predicted, each robot operator has to evacuate each robot traveling in a disaster occurrence area. In this case, for example, the robot operator has to collect disaster information, rewrite the travel route for the robot positioned in the disaster occurrence area to an evacuation route, and evacuate the robot.

With an increase in the area that the robot operator manages and in the number of robots in association with an increase in the number of robots and extension of the area, the robot operator has to evacuate each robot speedily when a disaster occurs or in the case where occurrence of a disaster is predicted. For this reason, the load of a process on the robot operator at the time of occurrence of a disaster or in the case where occurrence of a disaster is predicted increases extremely and difficulty in speedy evacuation of the robot is also assumed.

The present invention was made in view of the above-described circumstances and an object of the present invention is to provide a management device, a management method, and a management program that enable assistance in speedy evacuation of an autonomous robot at the time of occurrence of a disaster or in the case where occurrence of a disaster is predicted.

### [Solution to Problem]

In order to solve the above-described problems and achieve the object, a management device according to the present invention includes: a storage unit configured to store map information on each area in which a robot that travels autonomously outdoors and indoors travels; a collecting unit configured to collect external information containing disaster information; an acquisition unit configured to receive a current position of the robot or a travel route for the robot from a control device that controls the robot; a sensing unit configured to, based on the external information, sense occurrence of a disaster and a disaster occurrence area in which the disaster occurs; a specifying unit configured to, based on the current position of the robot or the travel route for the robot, specify the robot that is positioned in the disaster occurrence area or the robot that is predicted to be positioned in the disaster occurrence area; a determination unit configured to, based on the external information and the map information, determine an evacuation route to an evacuation site that is set previously with respect to each the robot positioned in the disaster occurrence area or each the robot predicated to be positioned in the disaster occurrence area; and a recommending unit configured to recommend the evacuation route to a terminal device.

### [Advantageous Effects of Invention]

According to the present invention, it is possible to assist in speedy evacuation of an autonomous robot at the time of occurrence of a disaster or in the case where occurrence of a disaster is predicted.

### [Brief Description of Drawings]

FIG. 1 is a diagram illustrating an overview of a management system in an embodiment.
FIG. 2 is a block diagram illustrating an example of a configuration of the management system in the embodiment.
FIG. 3 is a block diagram illustrating an example of a configuration of a control server illustrated in FIG. 2.
FIG. 4 is a block diagram illustrating an example of a configuration of a management server illustrated in FIG. 2.
FIG. 5 is a diagram illustrating an example of a map diagram of an area.
FIG. 6 is a diagram illustrating an example of setting evacuation routes.
FIG. 7 is a diagram illustrating the example of setting evacuation routes.
FIG. 8 is a diagram illustrating an example of a screen of the management server illustrated in FIG. 2.
FIG. 9 is a diagram illustrating an example of the screen of the management server illustrated in FIG. 2.
FIG. 10 is a diagram illustrating an example of a screen of the control server illustrated in FIG. 2.
FIG. 11 is a sequence chart illustrating a process procedure of a management process according to the embodiment.
FIG. 12 is a diagram illustrating a computer that executes a program.

### [Embodiments for Carrying Out the Invention]

An embodiment of a management device, a management method, and a management program according to the present application will be described in detail below according to the drawings. Note that the embodiment does not limit the management device, the management method, and the management program according to the present application.

### Embodiment

In the following embodiment, the management device and a flow of a process of the management method according to the embodiment will be described in order and the effect brought by the embodiment will be described at the end.

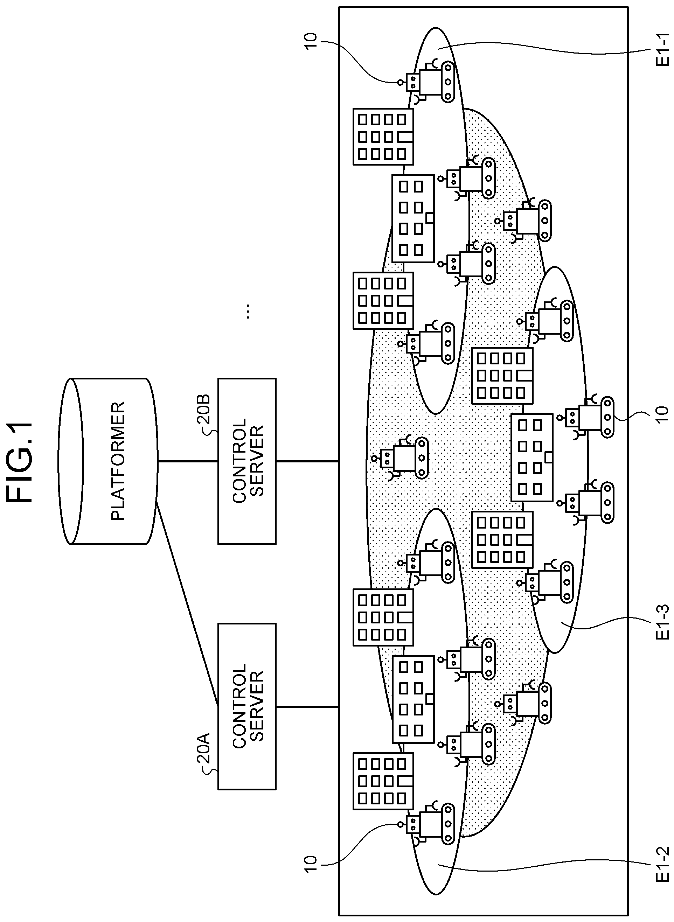

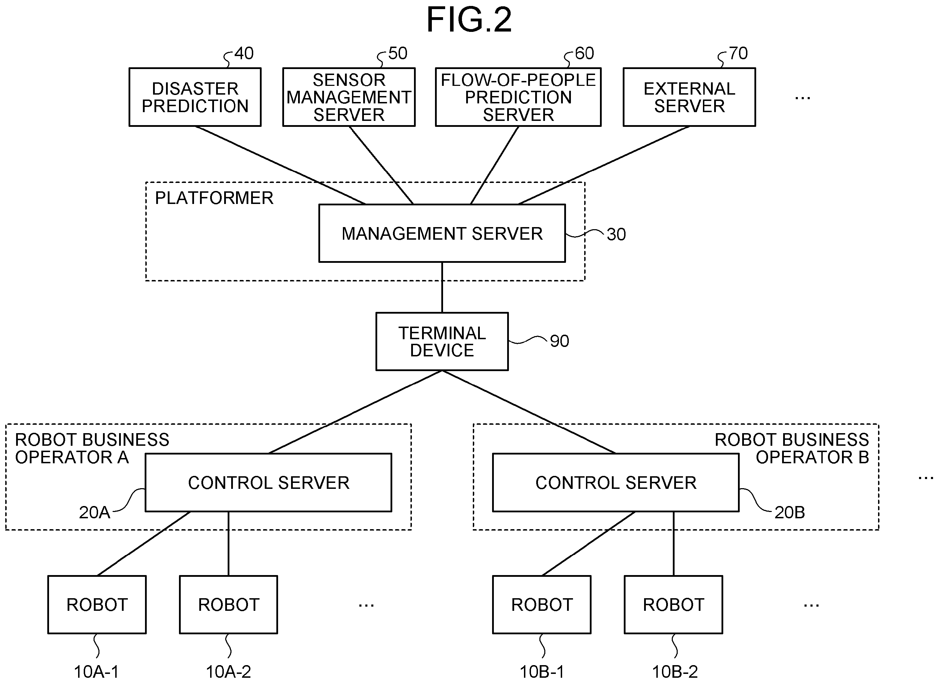

FIG. 1 is a diagram illustrating an overview of a management system in the embodiment. FIG. 2 is a block diagram illustrating an example of a configuration of the management system in the embodiment.

As illustrated in FIGS. 1 and 2, the management system in the embodiment includes control servers 20A and 20B (control device) that control robots 10A-1, 10A-2, 10B-1, and 10B-2 that travel indoors and outdoors autonomously and a management server 30 (management device) that provides information on control on the robots.

In the management system in the embodiment, the control servers 20A and 20B control the autonomous robots 10A-1, 10A-2, 10B-1, and 10B-2 by radio communication, or the like.

Note that the configuration illustrated in FIGS. 1 and 2 is an example only and the specific configuration and the number of devices are not particularly limited. When referred to collectively, the robots 10A-1, 10A-2, 10B-1, and 10B-2 are termed as robots 10. When referred to collectively, the robots 10A-1 and 10A-2 are termed as robots 10A. When referred to collectively, the robots 10B-1 and 10B-2 are termed as robots 10B. When referred to collectively, the control servers 20A and 20B are termed as control servers 20.

The control server 20A controls autonomous travel by the robot 10A according to a robot control system of a robot business operator A. The control server 20B controls autonomous travel by the robot 10B according to a robot control system of a robot business operator B. The control server 20, for example, sets a task of and a travel route for each robot 10 to be controlled via an operation performed by a robot operator. Note that the robot operator (human) sets a task of and a travel route for each robot 10 to be controlled by operating a terminal device, or the like, as the aforementioned operation performed by the robot operator.

According to control performed by the control server 20, the robot 10 travels areas E1-1 to E1-3 covering a plurality of facilities and areas around the facilities and shuttles among the areas E1-1 to E1-3 and executes tasks, such as goods delivery, guarding, guiding, cleaning, and transferring people.

The robot 10, for example, includes a communication unit that communicates with the control server 20 and a travel function enabling autonomous travel. The robot 10 also includes various types of sensors that sense surrounding obstacles, a touch panel that receives an input of an operation performed by the user and outputs sound or image information, and an input-output unit, such as a microphone and a speaker. The robot 10, for example, may include an imaging device and capture images of the surroundings of the robot 10. The robot 10 transmits results of detection performed by the sensors, the images captured by the imaging device, and various types of information that are input by the user to the control server 20 via the communication unit.

The robot 10 travels according to the travel route that is set by the control server 20 and executes the task that is set by the control server 20. Note that the current position of the robot 10 may be specifiable by the control server 20 using a positioning system, such as the GPS (Global Positioning System).

The management server 30 of a platformer provides the information on control on the robots to the terminal device. The management server 30 receives provision of the current position of or the travel route for the robot 10 from each control server 20. A period of travel of the travel route is also given to the travel route. The management server 30 may receive, from each control server 20, provision of the various types of information transmitted from the robot 10 to the control server 20.

The management server 30 collects external information from external various types of servers that are connected via a communication network. Based on the collected information, the management server 30 provides the information on control on the robots to the terminal device.

For example, there are a disaster prediction server 40, a sensor management server 50, a flow-of-people prediction server 60, and an external server 70 as external servers.

The disaster prediction server 40 is a sever that is set in the Japan Meteorological Agency, a local government, a private sector, or the like, predicts occurrence of an earthquake, a tsunami, a tornado or an eruption and announces a special warning, a warning, or an advisory and disaster management information.

The sensor management server 50 manages operations of detection performed by various types of sensors that are set in a robot travel area and collets results of detection performed by the various types of sensors. There are a security camera, a human detection sensor, and a temperature sensor that are set in respective spots, etc., as the various types of sensors.

Based on mobile data, images obtained by the security camera, transportation use information, and the result of detection performed by the sensor (for example, the human detection sensor), the flow-of-people prediction server 60 predicts a flow of people in a prediction subject area in a prediction subject period.

The external server 70 is a server that announces a news article, a blog article, and SNS (Social Networking Service) article, etc.

The management server 30 collects external information from the external various types of servers and, when occurrence of a disaster is sensed, recommends an evacuation route to an evacuation site for the robot 10 that is positioned in a disaster occurrence area to a terminal device 90. The evacuation site for the robot 10 is set previously. Note that the terminal device 90 that outputs the information transmitted from the management server 30 and that receives an operation on the management server 30 and the terminal device 90 capable of making an instruction to change the travel route for the robot 10 to the control server 20 are provided. A plurality of the terminal devices 90 may be provided per robot business operator.

The control server 20 sets an evacuation route for each robot, or the like, based on the information that is input from the terminal device 90 that the robot operator operates. For example, the robot operator rewrites the travel routes for the respective robots 10 to the evacuation routes that are recommended by the management server 30, respectively, and evacuates the robots 10 to the evacuation site. As described above, the management server 30 assists the autonomous robots in speedy evacuation at the time of occurrence of a disaster or in the case where occurrence of a disaster is predicted. Note that the terminal device 90 that is operated by the robot operator may be provided as a terminal device that is independent with respect to each robot business operator.

### Control Server

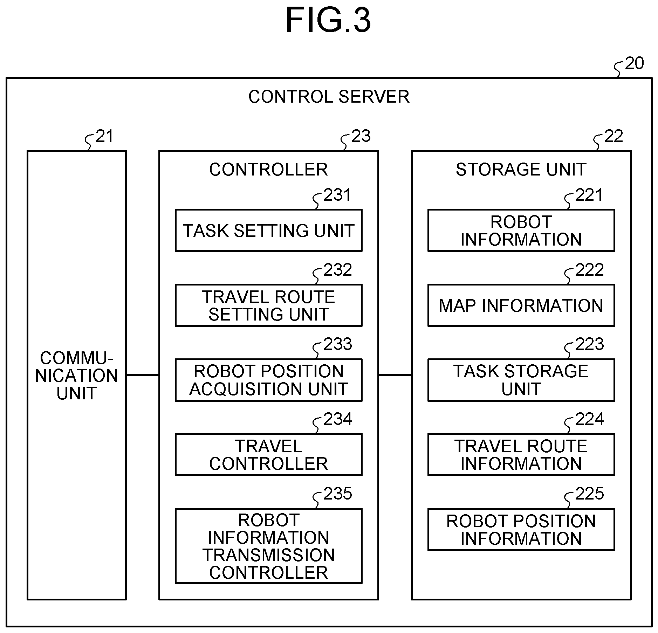

The control server 20 will be described. FIG. 3 is a block diagram illustrating an example of a configuration of the control server 20 illustrated in FIG. 2. As illustrated in FIG. 3, the control server 20, for example, includes a communication unit 21, a storage unit 22, and a controller 23. Note that an input device, such as a mouse or a keyboard, and an output device, such as a display or a speaker, are connected to the control server 20.

The communication unit 21 controls communication relating to various types of information. For example, the communication unit 21 controls communication performed with the robot 10 and communication performed with the management server 30. The communication unit 21 may transmit an instruction to set a task and a travel route and travel control information to the robot 10 and control travel by the robot 10 and execution of the task. The communication unit 21 may receive information that is acquired by the robot 10. The communication unit 21 may transmit the current position of the robot 10 or the travel route for the robot 10 to the management server 30.

The storage unit 22 stores data necessary for various types of processing performed by the controller 23 and a program. For example, the storage unit 22 may be a semiconductor memory device, such as a RAM (Random Access Memory) or a flash memory, or a storage device, such as a hard disk or an optical disk. The storage unit 22 may have robot information 221, map information 222, a task storage unit 223, travel route information 224, and robot position information 225.

The robot information 221 may be information containing identification information on, a type of, and a task executable by each robot that the control server 20 controls.

The map information 222 may be map information containing a map of each of the areas E1-1 to E1-3 and a map for shuttles among the areas E1-1 to E1-3. The map information 222 may be acquired previously and may be updated as appropriate based on the various types of sensor information, the information transmitted from the robot 10, etc. In the map information 222, facilities in each of the area E1-1 to E1-3, areas the robot 10 is able to travel in the facilities and around the facilities, and areas the robot 10 is able to travel among the areas E1-1 to E1-3 may be superimposed on a map. Note that the robot 10 may be able to travel indoors and outdoors.

The task storage unit 223 may be information on a history of tasks that are executed by each robot 10. A task being executed by each robot 10 may be registered by a task setting unit 231 (described below) in the task storage unit 223. There is goods delivery, guarding, guiding, cleaning, transferring people, or the like, as the task and the task storage unit 223 may store the identification information on the robot 10, identification information on the task, a period of execution of the task, etc.

The travel route information 224 may be information indicating the route that the robot 10 travels. As for the travel route, for example, a plurality of representative routes may be set previously according to any one or both of the area, the task, and the type of the robot 10 and a correction or an addition may be made according to a travel status. Each travel route for each robot 10 that is set by a travel route setting unit 232 (described below) may be registered in the travel route information 224.

The robot position information 225 may be information in which the identification information on the robot 10, the position of the robot 10, and the time of detection of the position are associate with one another.

The controller 23 includes an internal memory for storing a program defining various types of process procedures and necessary data and executes various processes according to the program and the data. The controller 23 may be an electronic circuit, such as a CPU (Central Processing Unit) or an MPU (Micro Processing unit), or an integrated circuit, such as an ASIC (Application Specific Integrated Circuit) or a FPGA (Field Programmable Gate Array).

The controller 23, for example, includes the task setting unit 231, the travel route setting unit 232, a robot position acquisition unit 233, a travel controller 234, and a robot information transmission controller 235.

For example, on receiving a request to provide a service from the user, the task setting unit 231 sets a task to be executed and selects the robot 10 that is to execute the task.

The travel route setting unit 232, for example, sets a travel route corresponding to the task in the robot 10 that is selected by the task setting unit 231. For example, the travel route setting unit 232 may select any one of the previously-set routes as the travel route according to an operation performed by the robot operator. The travel route setting unit 232 may set a route obtained by correcting the pre-set route according to an operation performed by the robot operator.

For example, using a positioning system, such as the GPS (Global Positioning System), the robot position acquisition unit 233 acquires the current position of each robot 10 to be controlled. The robot position acquisition unit 233 may store the position of the robot 10 and the time of detection of the position in the storage unit 22 in association with the identification information on the robot 10.

The travel controller 234, for example, controls the travel by the robot 10 to be controlled, thereby causing the robot 10 to be controlled to travel according to the travel route that is set by the travel route setting unit 232.

The robot information transmission controller 235, for example, transmits the information on each robot 10 to be controlled to the management server 30 via the communication unit 21. The robot information transmission controller 235 may transmit the current position of each robot 10 or the travel route for each robot 10 to the management server 30 together with the identification information on each robot 10 to be controlled. The robot information transmission controller 235 may transmit both the current position of each robot 10 to be controlled and the travel route for each robot 10 to the management server 30. The robot information transmission controller 235 may transmit the task of the robot 10 to be controlled and the information received from the robot 10 to the management server 30.

### Management Server

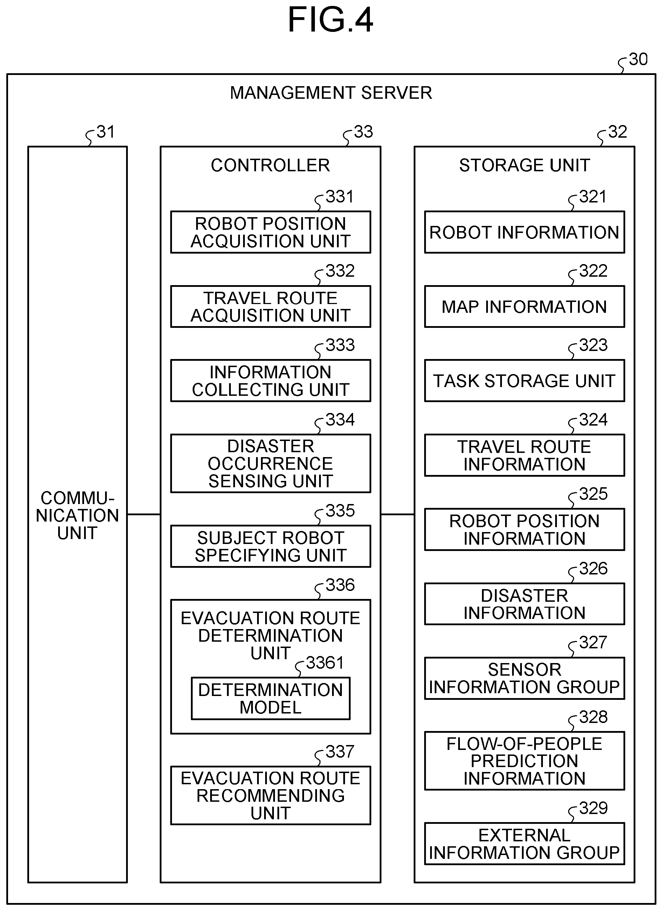

The management server 30 illustrated in FIG. 2 will be described next. FIG. 4 is a block diagram illustrating an example of a configuration of the management server 30 illustrated in FIG. 2. As illustrated in FIG. 4, the management server 30 includes a communication unit 31, a storage unit 32, and a controller 33. Note that an input device, such as a mouse or a keyboard, and an output device, such as a display or a speaker, are connected to the management server 30.

The communication unit 31 controls communication relating to various types of information. For example, the communication unit 31 controls communication performed with each external server and communication performed with the management server 30. The communication unit 31 receives the current position of the robot 10 to be controlled or the travel route for the robot 10 from the control server 20. The communication unit 31 receives the information acquired by the robot 10 to be controlled from the control server 20. The communication unit 31 receives external information containing disaster information from the external server.

The storage unit 32 stores data necessary for various types of processing performed by the controller 33 and a program. For example, the storage unit 32 may be a semiconductor memory device, such as a RAM or a flash memory, or a storage device, such as a hard disk or an optical disk. The storage unit 32 has robot information 321, map information 322, a task storage unit 323, travel route information 324, robot position information 325, disaster information 326, a sensor information group 327, a flow-of-people prediction information 328, and an external information group 329.

The robot information 321 is information in which identification information on the control server 20 and the identification information on each robot that the control server 20 controls are registered in association with each other. When the type of the robot 10 and an executable task are provided from the control server 20, the type of the robot 10 and the executable task are registered in the robot information 321 in association with the identification information on each robot.

The map information 322 is map information containing the map of each of the areas E1-1 to E1-3 and the map for shuttles among the areas E1-1 to E1-3. In the map information 322, the facilities in each of the area E1-1 to E1-3, the areas the robot 10 is able to travel in the facilities and around the facilities, and the areas the robot 10 is able to travel among the areas E1-1 to E1-3 are be superimposed on the map. The map information 322, for example, is provided from the control server 20.

When information on the task of the robot 10 is provided from the control server 20, the task storage unit 323 stores the task, a period of execution of the task, etc., in association with the identification information on the robot 10.

The travel route information 324 is information that indicates the travel route for the robot 10 that is provided from the control server 20. The identification information on the robot 10 and the travel route for the robot 10 are associated with the travel route information 324. The period of travel of the travel route is given to the travel route.

The robot position information 325 is information that indicates the current position of the robot 10 that is provided from the control server 20. The identification information on the robot 10, the position of the robot 10, and the time of detection of the position are associated with the robot position information 325.

The disaster information 326 is, for example, a special warning, a warning, or an advisory on a disaster and disaster management information and contains a type of a disaster of which occurrence is predicted, a degree of the disaster, a time of occurrence, and a period of occurrence. The disaster information 326, for example, is contained in information that is received from the disaster prediction server 40.

The sensor information group 327 is a group of sets of information indicating the results of detection performed by the various types of sensors that are set in the area the robots travel that are received from the sensor management server 50. The sensor information group 327 is, for example, images that are captured by the security cameras, the results of sensing by the human detection sensors, the temperatures detected by the temperature sensors, etc.

The flow-of-people prediction information 328 is information indicating a flow of people in the prediction subject period in the prediction subject area, which is the flow predicted by the flow-of-people prediction server 60. For example, when the management server 30 receives a special warning, a warning, or an advisory on a disaster and disaster management information, flow-of-people prediction information on a period of occurrence of the disaster in a disaster occurrence area is acquired according to a prediction request made by the management server 30 to the flow-of-people prediction server 60.

The external information group 329 is various types of articles that are announced by the external server 70 and SmartCity data. With the information, it is sometimes possible to recognize the status of the disaster consecutively.

The controller 33 includes an internal memory for storing a program that defines various types of process procedures and necessary data and execute various processes according to the program and the data. The controller 33 is an electronic circuit, such as a CPU or an MPU, or an integrated circuit, such as an ASIC or a FPGA.

The controller 33 includes a robot position acquisition unit 331 (acquisition unit), a travel route acquisition unit 332 (acquisition unit), an information collecting unit 333 (collecting unit), a disaster occurrence sensing unit 334 (sensing unit), a subject robot specifying unit 335 (specifying unit), an evacuation route determination unit 336 (determination unit), and an evacuation route recommending unit 337 (recommending unit).

The robot position acquisition unit 331 receives the identification information on the robot 10 and the current position of the robot 10 from the control server 20, thereby acquiring the current position of the robot 10. The robot position acquisition unit 331 registers the acquired current position of the robot 10 in the robot position information 325.

The travel route acquisition unit 332 receives the identification information on the robot and the travel route for the robot 10, thereby acquiring the travel route for the robot 10. The travel route acquisition unit 332 registers the acquired travel route for the robot 10 in the travel route information 324.

The information collecting unit 333 collects external information containing the disaster information. The information collecting unit 333 collects, as the external information, the special warning, warning, or advisory on the disaster and the disaster management information that are received from the disaster prediction server 40, the results of detection performed by the various types of sensors that are set in the area the robot travels that are received from the sensor management server 50, the flow-of-people prediction information on the disaster occurrence area that is predicted by the flow-of-people prediction server 60, and the various types of articles that are announced by the external server 70.

The information collecting unit 333 requests the flow-of-people prediction server 60 to predict a flow of people in the disaster occurrence area, thereby acquiring the flow-of-people prediction information on the disaster occurrence area. The information collecting unit 333 may collect the images captured by the robot 10 and the result of detection performed by the sensor of the robot 10 in order to determine whether it is possible to travel the surroundings of the robot 10.

Based on the external information, the disaster occurrence sensing unit 334 determines whether occurrence of a disaster is predicted. Based on the external information, the disaster occurrence sensing unit 334 senses occurrence of a disaster, a disaster occurrence area where the disaster occurs, and a disaster occurrence period on which occurrence of a disaster is predicted. Based on the special warning, warning, or advisory on the disaster and the disaster management information that are received from the disaster prediction server 40, the disaster occurrence sensing unit 334 senses that a disaster occurs in any one of the areas to be managed. Alternatively, the disaster occurrence sensing unit 334 may identify occurrence of a disaster and a disaster occurrence area from the various types of articles that are announced by the external server 70.

Based on the current position of the robot 10 and the travel route for the robot 10, the subject robot specifying unit 335 specifies the robot 10 positioned in the disaster occurrence area as a robot to be evacuated. Based on the current position of the robot 10 that is provided from the control server 20, the subject robot specifying unit 335 specifies the robot 10 that is positioned currently in the disaster occurrence area that is sensed by the disaster occurrence sensing unit 334. Based on the travel route for the robot 10 that is provided from the control server 20, the subject robot specifying unit 335 specifies the robot 10 currently traveling in the disaster occurrence area that is sensed by the disaster occurrence sensing unit 334.

Based on the external information that is collected by the information collecting unit 333 and the map information 322, the evacuation route determination unit 336 determines an evacuation route to the pre-set evacuation site with respect to each robot 10 positioned in the disaster occurrence area. The evacuation site is set previously and is registered in the map information 322. In addition to the position of the evacuation site, the number of robots that can be evacuated, the size, etc., are registered as the evacuation site in the map information 322.

When a plurality of evacuation sites is set in the disaster occurrence area, the evacuation route determination unit 336 determines evacuation routes for evacuating each robot positioned in the disaster occurrence area to the evacuation sites dispersedly.

The evacuation route determination unit 336 determines an evacuation route for each robot, avoiding a flow of people indicated by the result of predicting a flow of people. The evacuation route determination unit 336 determines evacuation routes that are different between robots positioned in the disaster occurrence area.

The evacuation route determination unit 336 may determine to which evacuation site the robot 10 is to be evacuated according to the task of the robot 10 and the type of the robot 10. The evacuation route determination unit 336, for example, may allot a shady evacuation site to the robot 10 in which a task of delivering refrigerated goods or frozen goods is set and determine an evacuation route.

For example, the evacuation route determination unit 336 selects or corrects any one of the travel routes that are set previously according to a determination rule that is set previously and sets a travel direction, thereby determining an evacuation route for the robot 10.

Alternatively, using a determination model 3361 for determining an evacuation route, the evacuation route determination unit 336 may determine an evacuation route. The determination model 3361 is a model that is trained to output an evacuation route for each robot 10 using, for example, as training data, various types of information, such as the map information on each area, the evacuation site, the positions of the robots 10, the number of the robots 10, the types of the robots 10, predicted flow-of-people information or history information on the flow of people, the type and the scale of the disaster, and the period of occurrence of the disaster, and evacuation routes corresponding to respective conditions.

The evacuation route recommending unit 337 recommends the evacuation route that is determined by the evacuation route determination unit 336 to the terminal device 90. For example, the evacuation route recommending unit 337 makes a transmission such that the robot 10 to be evacuated and the evacuation route for the robot 10 are displayed on a system screen that is displayed on a terminal device that the robot operator operates, or the like. Alternatively, the evacuation route recommending unit 337 may transmit visualized information obtained by superimposing text recommending evacuation associated with occurrence of the disaster and the evacuation route of each robot 10 on the map of the disaster occurrence area to the terminal device 90. Furthermore, based on the recommended information, the robot operator operates the terminal device, and the like, and changes the travel route for the robot 10.

### Example of Setting Routes

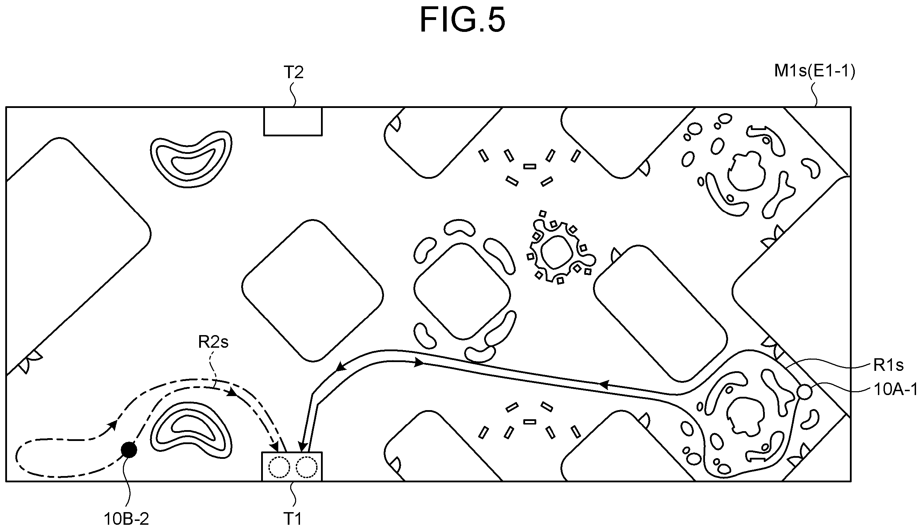

An example of the travel route for the robot 10 that is transmitted from the control server 20 will be described. With FIG. 5 and the following drawings, for example, the area E1-1 of the areas is exemplified and described. FIG. 5 is a diagram illustrating an example of a map diagram of the area E1-1.

As illustrated in a map M1s in FIG. 5, a plurality of facilities is provided in the area E1-1. The robot 10 is able to travel the inside of these facilities, the outdoors including areas other than buildings around the facilities, and the outdoors including areas other than objects. As illustrated in Map M1s, two evacuation sites T1 and T2 may be set as sites of evacuation of the robot 10 in the area E1-1. It is possible to evacuate two robots 10 to each of the evacuation sites T1 and T2.

For example, travel routes for the two robots 10A-1 and 10B-2 and the current positions of the robots are provided from the control server 20 to the management server 30. For example, the travel route for the robot 10A-1 is a travel route R1s and the travel route for the robot 10B-2 is a travel route R2s.

### Example of Setting Evacuation Routes

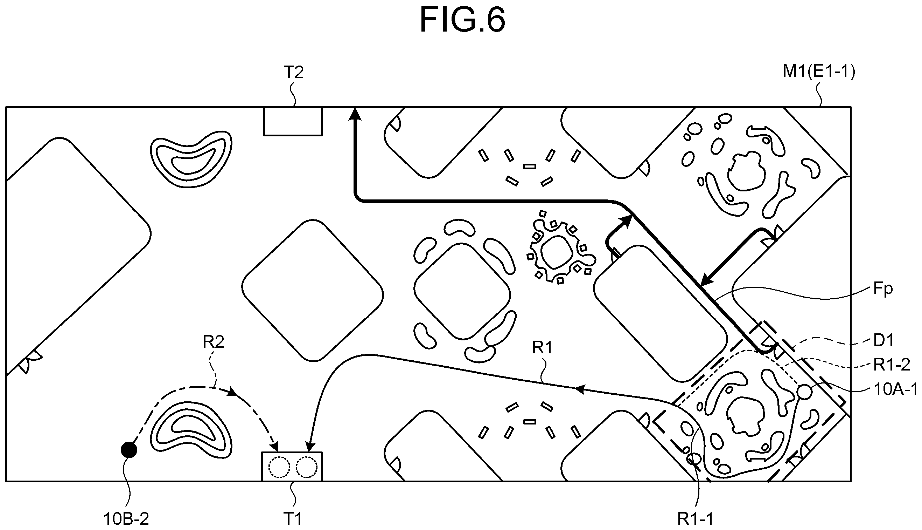

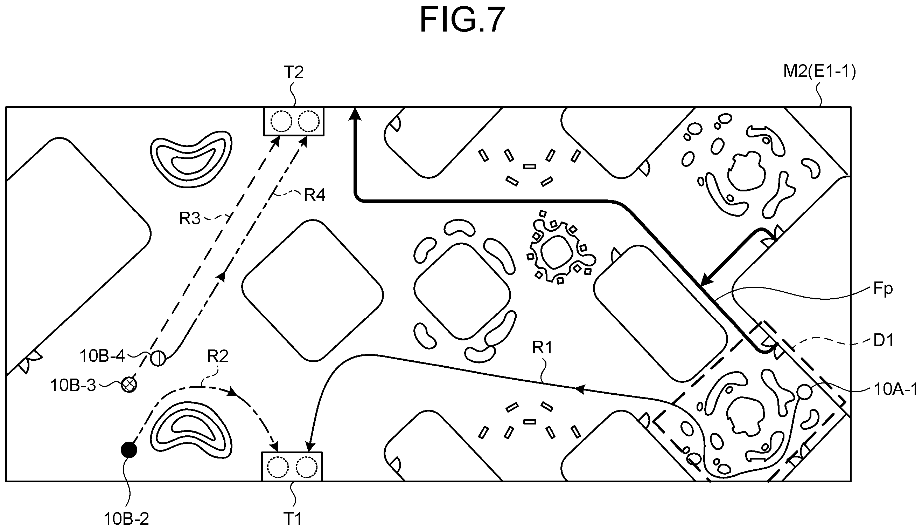

Subsequently, setting an evacuation route for the robot 10 in the case where it is sensed that the area E1-1 is a disaster occurrence area will be described. FIG. 6 and FIG. 7 are diagrams illustrating an example of setting evacuation routes.

As illustrated in the map M1 (FIG. 6), when the two robots 10A-1 and 10B-2 travel in the area E1-1, the evacuation route determination unit 336 determines evacuation routes R1 and R2 for evacuating the robots 10A-1 and 1-B-2 to the closest evacuation site T1.

The evacuation route determination unit 336 determines evacuation routes R1 and R2 so as not to overlap a flow of people Fp that is predicted on the period of occurrence of the disaster. The flow of people Fp is a predicted route in which people moves for evacuation.

For example, for the robot 10A-1, the evacuation route determination unit 336 determines the evacuation route R1 containing not a route R1-2 partly overlapping the flow of people Fp but a route R1-1 avoiding the flow of people Fp in an area D1. Accordingly, the management system is able to evacuate the robot 10 to the evacuation site without blocking the route in which people evacuates. In other words, the management system is able to prevent the robot 10 from being an obstacle on the route of evacuation of people (for example, the flow of people Fp) when a disaster occurs. For the robot 10B-2, the evacuation route determination unit 336 determines the shortest route to the evacuation site T1 as an evacuation route R2.

As illustrated in a map M2 (FIG. 7), when four robots 10A-1 and 10B-2 to 10B-4 travel in the area E1-1, the evacuation route determination unit 336 determines evacuation routes for evacuating the robots 10A-1 and 10B-2 to 10B-4 to the evacuation sites T1 and T2 dispersedly.

For example, for the robots 10A-1 and 10B-2, the evacuation route determination unit 336 determines the evacuation routes R1 and R2 for evacuation to the evacuation site T1. For the robots 10B-3 and 10B-4, the evacuation route determination unit 336 determines evacuation routes R3 and R4 for evacuation to the evacuation site T2. The management system determines evacuation routes such that the robots 10 are able to evacuate to each evacuation site dispersedly, thereby preventing congestions in the evacuation sites. In other words, by arranging evacuation spots for the robots 10 appropriately, the management system is able to evacuate the robots 10 while preventing the robots 10 from being stagnant.

Furthermore, for the robots 10B-3 and 10B-4 of which positions are close, the evacuation route determination unit 336 also disperses evacuation routes between the robots 10B-3 and 10B-4. Specifically, the evacuation route determination unit 336 determines the evacuation routes R3 and R4 different between the robots 10B-3 and 10B-4, thereby avoiding a crash between the robots 10B-3 and 10B-4 and smoothly evacuating each of the robots 10B-3 and 10B-4.

### Example of Screen Display

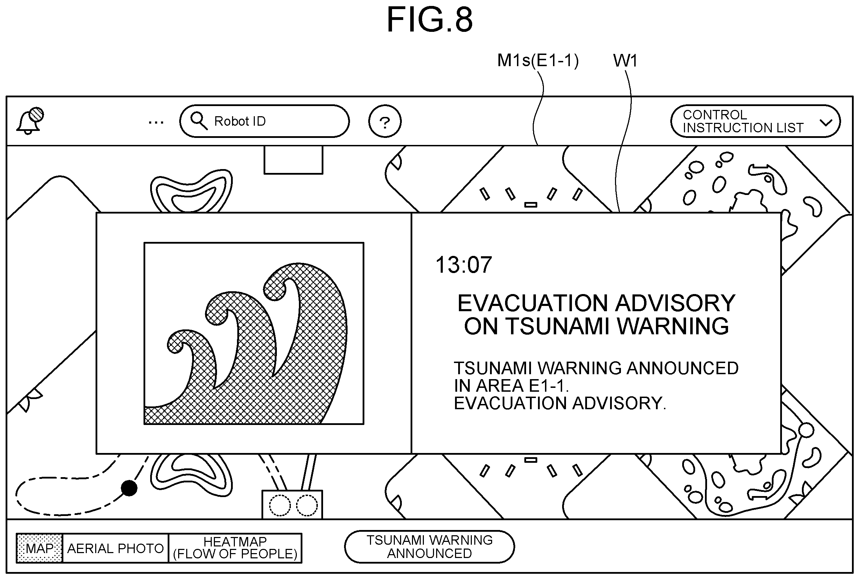

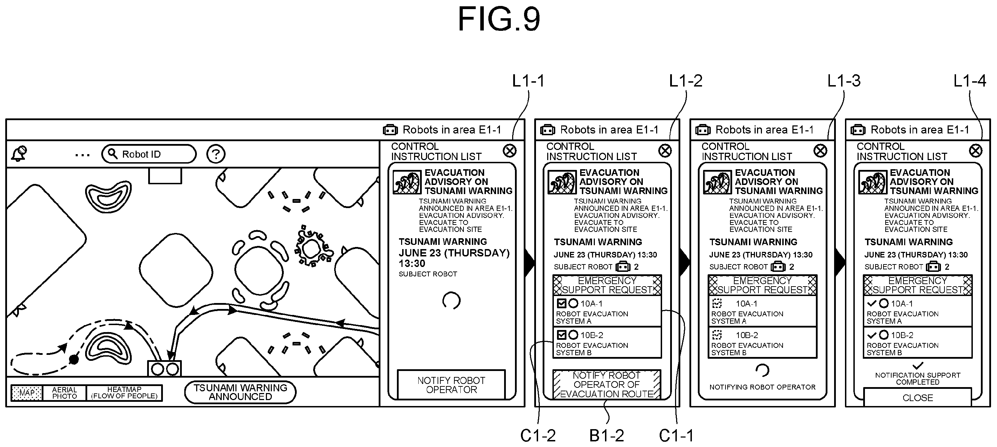

For example, an example of a screen display of the management server in the case where a tsunami waning is announced in the area E1-1 will be described. FIG. 8 and FIG. 9 are diagrams illustrating an example of the screen of the management server 30 illustrated in FIG. 2.

On sensing that a tsunami warning is announced in the area E1-1 based on the information received from the disaster prediction server 40, the management server 30 superimposes a window W1 indicating that an evacuation advisory on the tsunami warning is issued onto the map M1s (FIG. 8) of the area E1-1.

The management server 30 specifies the robot 10 positioned in the area E1-1 as the robot 10 to be evacuated in a period on which a tsunami is predicted. For example, the management server 30 specifies that the robots 10A-1 and 10B-2 as the robots 10 positioned in the area E1-1 and displays the robots in columns C1-1 and C1-2 in a control instruction list L1-2 (FIG. 9).

When a button B1-2 for "notifying the robot operator of the evacuation route" is selected by the operator of the management server 30, the management server 30 determines the evacuation routes R1 and R2 for the robots 10A-1 and 10B-2. The management server 30 transmits the evacuation route R1 for the robot 10A-1 to the terminal device 90. The management server 30 transmits the evacuation route R2 for the robot 10B-2 to the terminal device 90 (refer to control instruction lists L1-3 and L1-4). Based on the recommended information, the robot operator may change the travel route for the robot 10 by operating the terminal device, and the like.

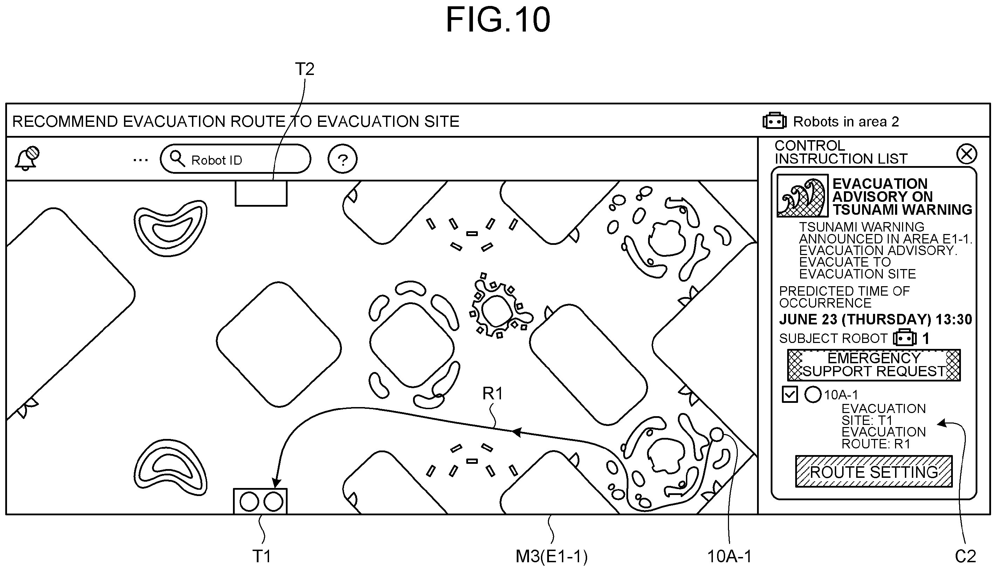

FIG. 10 is a diagram illustrating an example of a screen of the control server 20A illustrated in FIG. 2. On the terminal device of the operator of the robot 10A-1, it is displayed that a tsunami waning is announced in the area E1-1 on the control instruction list of an evacuation route recommendation screen (FIG. 10). In the column C2 of the control instruction list, identification information "10A-1" on the robot 10 that is specified as a subject to be evacuated and text information on the evacuation site "T1" and the evacuation route "R1" for the robot 10A-1 are displayed. Furthermore, the evacuation route R1 for the robot 10A-1 is displayed in a superimposed manner on a map M3 of the area E1-1.

By checking the evacuation route recommendation screen (FIG. 10), the robot operator is able to recognize the information on the robot 10 to be evacuated, the evacuation site, and the evacuation route.

After correcting the recommended evacuation route R1 for the robot 10A-1, the robot operator may input a control process to evacuate the robot 10A-1 in the corrected evacuation route.

### Management Process

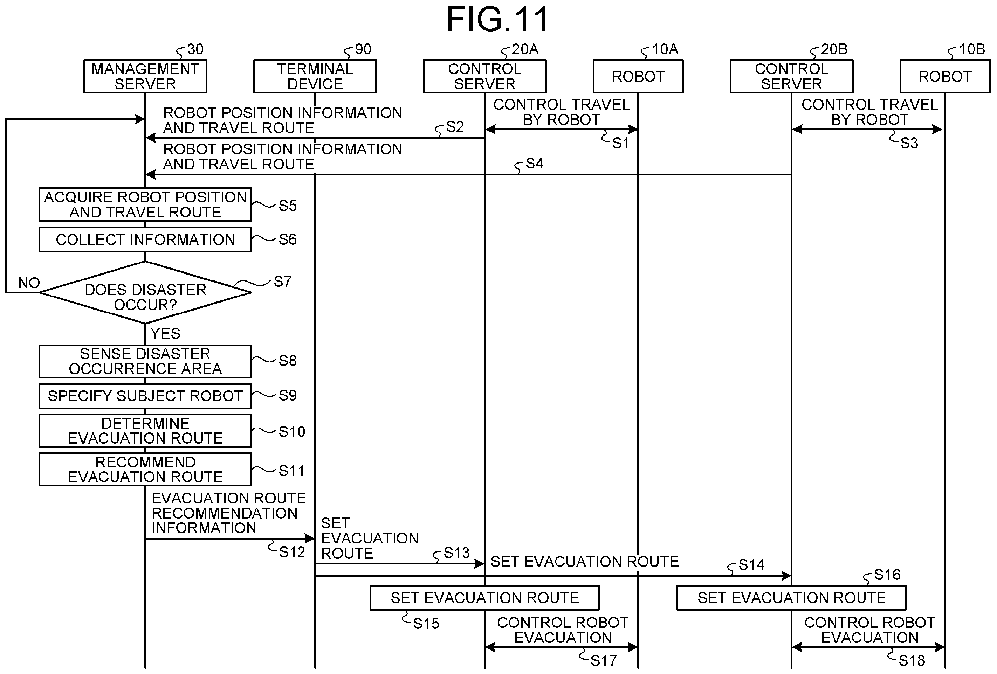

A management process according to the embodiment will be described next. FIG. 11 is a sequence chart illustrating a process procedure of the management process according to the embodiment.

As illustrated in FIG. 11, the control servers 20A and 20B communicate with the robots 10A and 10B and thereby sets tasks and travel routes in the robots 10A and 10B and controls autonomous travel by the robots 10A and 10B (step S1 and S3).

The management server 30 receives the current positions of or the travel routes for the respective robots 10 from the respective control servers 20 (step S2 and S4), thereby acquiring the current positions of and the travel routes for the respective robots 10 (step S5).

The management server 30 collects external information containing disaster information from the external server, or the like (step S6). Based on the external information, the management server 30 determines whether occurrence of a disaster is predicted (step S7). When occurrence of a disaster is not predicted (Step S7: No), the management server 30 goes back to the beginning.

When occurrence of a disaster is predicted (step S7: Yes), the management server 30 senses a disaster occurrence area where a disaster occurs and a disaster occurrence period on which occurrence of the disaster is predicted (step S8).

Based on the current positions of the robots 10 and the travel routes for the robots 10, the management server 30 specifies the robot 10 that is positioned in the disaster occurrence area or the robot 10 that is predicted to be positioned in the disaster occurrence area (step S9).

Subsequently, based on the external information collected by the information collecting unit 333 and the map information 322, the management server 30 determines an evacuation route to a pre-set evacuation site with respect to each robot 10 positioned in the disaster occurrence area (step S10). The management server 30 then recommends the information on the robot 10 positioned in the disaster occurrence area or the robot 10 predicted to be positioned in the disaster occurrence area and the evacuation route for each robot that are determined by the evacuation route determination unit 336 to, for example, the terminal device 90 (steps S11 and S12).

When the evacuation route for the robot 10 positioned in the disaster occurrence area is set via the terminal device 90 that is operated by the robot operator (steps S13, S14, S15 and S16), the control servers 20A and 20B cause the robot 10 positioned in the disaster occurrence area to travel to the evacuation site according to the set evacuation route (steps S17 and S18).

### Effect of Embodiment

As described above, the disaster information and the information on the robot 10 positioned in the disaster occurrence area or the robot 10 that is predicted to be positioned in the disaster occurrence area are provided from the management server 30 to the terminal device 90. For this reason, the robot operator of the control server 20 does not have to collect disaster information, sense occurrence of a disaster, or specify the robot 10 positioned in the disaster occurrence area.

Furthermore, the evacuation route for the robot 10 positioned in the disaster occurrence area is recommended by the management server 30 to the terminal device 90. For this reason, when rewriting the travel route for the robot 10 to an evacuation route, the robot operator of the control server 20 does not create an evacuation route from scratch and only has to set an evacuation route based on the evacuation route that is recommended by the management server 30.

Thus, according to the embodiment, the load of the process on the robot operator until evacuation of the robots is reduced and it is possible to speedily execute evacuation of the robots 10 at the time of occurrence of a disaster or in the case where occurrence of a disaster is predicted.

When an evacuation route is set with respect to each robot business operator, because it is not possible to know the position of a robot controlled by another business operator, the case of a crash during evacuation is also assumed. On the other hand, in the embodiment, the management server 30 collectively collects information, specifies, not limited to the robot 10 of any business operator, each robot 10 positioned in the disaster occurrence area, and recommends an evacuation route suitable to each robot 10 to the terminal device 90.

For this reason, according to the embodiment, even when a large number of robots are introduced by a plurality of robot business operators to a plurality of areas, determination of evacuation routes across the areas and the robot business operators is enabled. Thus, according to the embodiment, it is possible to assist in speedy and smooth evacuation of the robot 10 positioned in the disaster occurrence area when a disaster occurs.

### System Configuration, etc.

Each component of each device illustrated in the drawings is a functional idea and need not necessarily be configured physically as illustrated in the drawings. In other words, specific modes of distribution and integration of devices are not limited to those illustrated in the drawings and all or part of the devices can be configured by functional or physical distribution or integration in any unit according to various types of loads and usage. Furthermore, all or given part of each processing function implemented by each device can be realized by a CPU or a GPU (Graphics Processing Unit) and a program that is analyzed and executed by the CPU or the GPU or can be realized as hardware according to wired logic.

Among the processes described in the above-described embodiment, all or part of the process that is described as one performed automatically can be performed manually or all or part of the process that is described as one performed manually can be performed automatically by a known method. In addition to this, the process procedure, the control procedure, the specific names, and the information including various types of data and parameters that are presented in the description above and the drawings are changeable freely unless otherwise noted.

### Program

It is possible to create a program in which the process that the management server 30 described in the above-described embodiment executes is written in a computer-executable language. For example, it is also possible to create a program in which the processes that the control server 20 and the management server 30 in the embodiment execute in a computer-executable language. In In this case, execution of the program by a computer makes it possible to obtain the same effect as that of the above-described embodiment. Furthermore, the program may be recorded in a computer-readable recording medium and a computer may be caused to read and execute the program that is recorded in the recording medium, thereby realizing the same processes as those of the above-described embodiment.

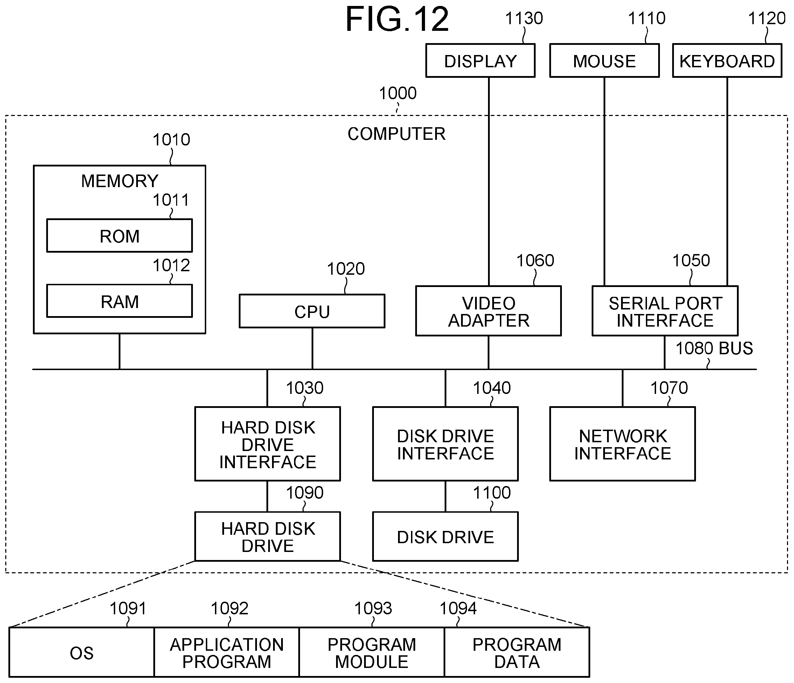

FIG. 12 is a diagram illustrating a computer that executes a program. As exemplified in FIG. 12, a computer 1000 includes, for example, a memory 1010, a CPU 1020, a hard disk drive interface 1030, a disk drive interface 1040, a serial port interface 1050, a video adapter 1060, and a network interface 1070 and each of these units is connected via a bus 1080.

As exemplified in FIG. 12, the memory 1010 includes a ROM (Read Only Memory) 1011 and a RAM 1012. The ROM 1011, for example, stores a boot program, such as a BIOS (Basic Input Output System). As exemplified in FIG. 12, the hard disk drive interface 1030 is connected to a hard disk drive 1090. The disk drive interface 1040 is connected to a disk drive 1100. For example, a detachable recording medium, such as a magnetic disk or an optical disk, is inserted into the disk drive 1100. The serial port interface 1050 is connected to, for example, a mouse 1110 and a keyboard 1120. The video adapter 1060 is connected to, for example, a display 1130.

As exemplified in FIG. 12, the hard disk drive 1090 stores, for example, an OS (Operating System) 1091, an application program 1092, a program module 1093, and program data 1094. In other words, the above-described program is stored in, for example, the hard disk drive 1090 as a program module in which instructions to be executed by the computer 1000 are written.

The various types of data described in the above-described embodiment are stored in, for example, the memory 1010 and the hard disk drive 1090 as program data. The CPU 1020 reads the program module 1093 and the program data 1094 that are stored in the memory 1010 and the hard disk drive 1090 to the RAM 1012 as requested and executes various types of process procedure.

Note that the program module 1093 and the program data 1094 according to the program are not limited to being stored in the hard disk drive 1090, and the program module 1093 and the program data 1094 may be stored in, for example, a detachable storage medium and may be read by the CPU 1020 via the disk drive, or the like. Alternatively, the program module 1093 and the program data 1094 according to the program may be stored in another computer that is connected via a network (such as a LAN (Local Area Network) or a WAN (Wide Area Network)) and may be read by the CPU 1020 via the network interface 1070.

The above-described embodiment and modifications of the embodiment are covered by the invention described in CLAIMS and equivalents of the invention as being covered by the technique disclosed by the present application.

### [Explanation of Reference]

10, 10A, 10B, 10A-1, 10A-2, 10B-1 TO 10B-4 ROBOT
20, 20A, 20B CONTROL SERVER
30 MANAGEMENT SERVER
40 DISASTER PREDICTION SERVER
50 SENSOR MANAGEMENT SERVER
60 FLOW-OF-PEOPLE PREDICTION SERVER
70 EXTERNAL SERVER
21, 31 COMMUNICATION UNIT
22, 32 STORAGE UNIT
23, 33 CONTROLLER
221, 321 ROBOT INFORMATION
222, 322 MAP INFORMATION
223, 323 TASK STORAGE UNIT
224, 324 TRAVEL ROUTE INFORMATION
225, 325 ROBOT POSITION INFORMATION
231 TASK SETTING UNIT
232 TRAVEL ROUTE SETTING UNIT
233 ROBOT POSITION ACQUISITION UNIT
234 TRAVEL CONTROLLER
235 ROBOT INFORMATION TRANSMISSION CONTROLLER
326 DISASTER INFORMATION
327 SENSOR INFORMATION GROUP
328 FLOW-OF-PEOPLE PREDICTION INFORMATION
329 EXTERNAL INFORMATION GROUP
331 ROBOT POSITION ACQUISITION UNIT
332 TRAVEL ROUTE ACQUISITION UNIT
333 INFORMATION COLLECTING UNIT
334 DISASTER OCCURRENCE SENSING UNIT
335 SUBJECT ROBOT SPECIFYING UNIT
336 EVACUATION ROUTE DETERMINATION UNIT
337 EVACUATION ROUTE RECOMMENDING UNIT
3361 DETERMINATION MODEL

## Claims

1. A management device comprising:
a storage unit configured to store map information on each area in which a robot that travels autonomously outdoors and indoors travels;
a collecting unit configured to collect external information containing disaster information;
an acquisition unit configured to receive a current position of the robot or a travel route for the robot from a control device that controls the robot;
a sensing unit configured to, based on the external information, sense occurrence of a disaster and a disaster occurrence area in which the disaster occurs;
a specifying unit configured to, based on the current position of the robot or the travel route for the robot, specify the robot that is positioned in the disaster occurrence area or the robot that is predicted to be positioned in the disaster occurrence area;
a determination unit configured to, based on the external information and the map information, determine an evacuation route to an evacuation site that is set previously with respect to each the robot positioned in the disaster occurrence area or each the robot predicated to be positioned in the disaster occurrence area; and
a recommending unit configured to recommend the evacuation route to a terminal device.

2. The management device according to claim 1, wherein, when a plurality of the evacuation sites is set in the disaster occurrence area, the determination unit determines evacuation routes for evacuating each robot positioned in the disaster occurrence area to the evacuation sites dispersedly.

3. The management device according to claim 1, wherein the external information contains a result of predicting a flow of people in the disaster occurrence area, and
the determination unit determines evacuation routes avoiding the flow of people presented by the result of predicting the flow of people.

4. The management device according to claim 1, wherein the determination unit determines evacuation routes that are different between robots positioned in the disaster occurrence area.

5. A management method executed by a management device, the management method comprising:
a step of collecting external information containing disaster information;
a step of receiving a current position of the robot or a travel route for the robot from a control device that controls a robot that travels autonomously outdoors and indoors;
a step of, based on the external information, sensing occurrence of a disaster and a disaster occurrence area in which the disaster occurs;
a step of, based on the current position of the robot or the travel route for the robot, specifying the robot that is positioned in the disaster occurrence area or the robot that is predicted to be positioned in the disaster occurrence area;
a step of, based on the external information and map information on each area in which the robot travels, determining an evacuation route to an evacuation site that is set previously with respect to each the robot positioned in the disaster occurrence area or each the robot predicated to be positioned in the disaster occurrence area; and
a step of recommending the evacuation route to a terminal device.

6. A management program that causes a computer to execute:
a step of collecting external information containing disaster information;
a step of receiving a current position of the robot or a travel route for the robot from a control device that controls a robot that travels autonomously outdoors and indoors;
a step of, based on the external information, sensing occurrence of a disaster and a disaster occurrence area in which the disaster occurs;
a step of, based on the current position of the robot or the travel route for the robot, specifying the robot that is positioned in the disaster occurrence area or the robot that is predicted to be positioned in the disaster occurrence area;
a step of, based on the external information and map information on each area in which the robot travels, determining an evacuation route to an evacuation site that is set previously with respect to each the robot positioned in the disaster occurrence area or each the robot predicated to be positioned in the disaster occurrence area; and
a step of recommending the evacuation route to a terminal device.
